# EUROPEAN PATENT APPLICATION

(11) **EP 4 319 425 A1**
(43) Date of publication of application: **07.02.2024**
(21) Application number: 21935053.5
(22) Date of filing: 02.04.2021
(51) Int. Cl.: H04W 72/12, H04W 52/02

(54) **TERMINAL, WIRELESS COMMUNICATION METHOD, AND BASE STATION**

(71) Applicant: NTT DOCOMO, INC., Tokyo 100-6150 (JP)
(72) Inventor: OHARA, Tomoya, Tokyo 100-6150 (JP); OKAMURA, Masaya, Tokyo 100-6150 (JP); HARADA, Hiroki, Tokyo 100-6150 (JP); KURITA, Daisuke, Tokyo 100-6150 (JP); OKANO, Mayuko, Tokyo 100-6150 (JP)
(74) Representative: Hoffmann Eitle
(86) International application number: PCT/JP2021/014401
(87) International publication number: WO 2022/208893

(57) **Abstract**

A terminal according to one aspect of the present disclosure includes a control section that controls, in either state of an idle state or an inactive state, operation for at least one of reception of downlink data and transmission of uplink data, and a transmitting/receiving section that performs the operation without transmitting, before the operation, a random access preamble in the state. According to one aspect of the present disclosure, it is possible to reduce power consumption/latency.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), reduction of power consumption/latency is under study.

However, how a terminal in an idle/inactive mode operates for reduction of the power consumption/latency is indefinite. Unless the operation in the idle/inactive mode is definite, reduction of the power consumption/latency may be hindered.

Thus, an object of the present disclosure is to provide a terminal, a radio communication method, and a base station that reduce power consumption/latency.

### Solution to Problem

A terminal according to one aspect of the present disclosure includes a control section that controls, in either state of an idle state or an inactive state, operation for at least one of reception of downlink data and transmission of uplink data, and a transmitting/receiving section that performs the operation without transmitting, before the operation, a random access preamble in the state.

### Advantageous Effects of Invention

According to one aspect of the present disclosure, it is possible to reduce power consumption/latency.

### Brief Description of Drawings

[FIG. 1] FIG. 1 is a diagram to show an example of UL data transmission according to a first embodiment.
[FIG. 2] FIG. 2 is a diagram to show an example of a schematic structure of a radio communication system according to one embodiment.
[FIG. 3] FIG. 3 is a diagram to show an example of a structure of a base station according to one embodiment.
[FIG. 4] FIG. 4 is a diagram to show an example of a structure of a user terminal according to one embodiment.
[FIG. 5] FIG. 5 is a diagram to show an example of a hardware structure of the base station and the user terminal according to one embodiment.

### Description of Embodiments

### (Traffic Types/Services)

In future radio communication systems (for example, NR), traffic types (also referred to as services, service types, communication types, use cases, or the like), such as further enhancement of mobile broadband (for example, enhanced Mobile Broadband (eMBB)), machine type communication that implements multiple simultaneous connections (for example, massive Machine Type Communications (mMTC), Internet of Things (IoT)), and high-reliable and low-latency communication (for example, Ultra-Reliable and Low-Latency Communications (URLLC)), are assumed. For example, in URLLC, lower latency and higher reliability in comparison to eMBB are required.

The traffic type may be identified based on at least one of the following in a physical layer.
- Priority
- Logical channel having different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Field in DCI (for example, a newly added field or reuse of an existing field, a priority field)

Specifically, a traffic type of HARQ-ACK for a PDSCH may be determined on the basis of at least one of the following.
- MCS index table used for determination of at least one of modulation order, target code rate, and transport block size (TBS) of the PDSCH (for example, whether to use MCS index table 3)
- RNTI used for CRC scrambling of DCI used for scheduling of the PDSCH (for example, which of a C-RNTI or an MCS-C-RNTI the CRC scrambling is performed by)

A traffic type of an SR may be determined on the basis of a higher layer parameter used as an SR identifier (SR-ID). The higher layer parameter may indicate which of an eMBB or URLLC the traffic type of the SR corresponds to.

A traffic type of CSI may be determined on the basis of configuration information related to a CSI report (CSIreportSetting), a DCI type or a DCI transmission parameter used for a trigger, or the like. The configuration information, the DCI type, and the like may indicate which of an eMBB or URLLC the traffic type of the CSI corresponds to. The configuration information may be a higher layer parameter.

A traffic type of a PUSCH may be determined on the basis of at least one of the following.
- MCS index table used for determination of at least one of modulation order, target code rate, and TBS of the PUSCH (for example, whether to use MCS index table 3)
- RNTI used for CRC scrambling of DCI used for scheduling of the PUSCH (for example, which of a C-RNTI or an MCS-C-RNTI the CRC scrambling is performed by)

The traffic type may be associated with communication requirements (requirements such as latency and an error rate, required conditions), data types (voice, data, and the like), and the like.

A difference between URLLC requirements and eMBB requirements may be that latency of URLLC is lower than that of an eMBB, or may be that the URLLC requirements include reliability requirements.

For example, user (U)-plane latency requirements for the eMBB may include downlink U-plane latency being 4 ms and uplink U-plane latency being 4 ms. On the other hand, U-plane latency requirements for the URLLC may include downlink U-plane latency being 0.5 ms and uplink U-plane latency being 0.5 ms. The reliability requirements for the URLLC may include a 32-byte error rate being 10-5 for U-plane latency of 1 ms.

As enhanced Ultra Reliable and Low Latency Communications (eURLLC), enhancement of reliability of unicast data traffic is mainly under study. Hereinafter, the URLLC and the eURLLC are simply referred to as URLLC when not being distinguished from each other.

For Rel-16 (or later versions) NR, a case that multi-level (for example, 2-level) priorities are configured for a specific signal or channel is under study. For example, it is assumed that communication is controlled (for example, transmission control in a case of contention or the like) by configuring a separate priority for each of signals or channels corresponding to respective different traffic types (also referred to as services, service types, communication types, use cases, or the like). Thus, communication can be controlled by configuring, for the same signal or channel, a priority varying depending on a service type or the like.

A priority for the URLLC may be higher than a priority for the eMBB. The priority may be set to "high" (high priority, 1) for the URLLC, and the priority may be set to "low" (low priority, 0) for the eMBB.

A reduced function of a UE may be defined as a UE category/capability for Internet of Things (IoT). This UE category/capability may be, for example, enhanced machine type communication (eMTC) in LTE, narrow band (NB)-IoT, or reduced capability (RedCap) in NR. Such a use case of the UE may be an industry wireless sensor NW (IWSN), a video surveillance system, a wearable device, or the like.

### (UE State)

In future radio communication systems (also hereinafter referred to as NR), it is assumed that a terminal (also referred to as a user terminal, User Equipment (UE), device, or the like) has a plurality of states depending on traffic activities.

For example, the UE of NR may have three states, an idle state, an inactive state, and a connected state, in a radio resource control (RRC) layer. The states may also be referred to as UE states, RRC states, or the like.

Here, the idle state is a state in which RRC connection between the UE and a base station is not established, and is also referred to as an RRC idle state (RRC_IDLE state), RRC idle (RRC_IDLE), or the like. Reconfiguration of RRC connection is necessary for the UE in the idle state to transition to the connected state in which data transfer is available.

The inactive state is a state in which RRC connection between the UE and the base station is established, but data transfer is unavailable, and is also referred to as an RRC inactive state (RRC_INACTIVE state), RRC inactive (RRC_INACTIVE), or the like. Since the RRC connection is established, the UE in the inactive state can transition to the connected state more quickly than that in the idle state. Thus, delay time until a start of data transfer becomes shorter than that of the UE in the idle state.

The connected state is a state in which RRC connection between the UE and the base station is established, and data transfer is available, and is also referred to as an RRC connected state (RRC_CONNECTED state), RRC connected (RRC_CONNECTED), or the like. The UE in the connected state monitors a downlink control channel (for example, a Physical Downlink Control Channel (PDCCH)) in order to determine whether data is scheduled, and thus consumes more power as compared to that in the idle state or the inactive state.

### (Paging)

In LTE, system information change notification using paging information (Paging message) is supported for a user terminal in an RRC connected state (RRC_CONNECTED) and a user terminal in an RRC idle state (RRC_IDLE). The system information change notification using the paging information (Paging message) is also supported in NR. In NR, the system information change notification using the paging information (Paging message) can be performed for respective a user terminal in an RRC connected state (RRC_CONNECTED), a user terminal in an RRC idle state (RRC_IDLE), and a user terminal in an RRC inactive state (RRC_INACTIVE).

In NR, the UE in the RRC idle state or the RRC inactive state (RRC_INACTIVE) performs discontinuous reception (DRX) at a certain periodicity in order to reduce power consumption. The UE monitors one paging occasion (PO) for each periodicity of DRX (DRX periodicity, DRX cycle).

Here, PO is a set of monitoring occasions for a downlink control channel (for example, a PDCCH) (monitoring periods, PDCCH monitoring occasions). PO may be constituted by one or more time-domain resource units (for example, one or more slots, one or more subframes, or one or more symbols).

In PO, downlink control information (DCI) for scheduling a downlink shared channel (for example, a PDSCH) to transfer a paging message (DCI for paging, paging DCI, DCI format 1_0) is transmitted. The paging DCI may have a cyclic redundancy check (CRC) bit scrambled by a certain radio network temporary identifier (Paging-Radio Network Temporary Identifier (P-RNTI)). When detecting downlink control information for which a CRC is scrambled by a P-RNTI, the user terminal can judge that the downlink control information is the paging DCI for scheduling the PDSCH to transfer the paging message.

One paging frame (PF) is one radio frame, and may include one or more POs. The PF may be a start point of PO. Each radio frame may be identified by a system frame number (SFN).

In the RRC connected state (RRC_CONNECTED), when a common search space for monitoring paging (paging search space) is provided, the UE monitors the paging DCI in at least one PO in a period for change of system information.

The UE receives, on the basis of a short message transmitted by the paging DCI, indication of at least one of system information change and Public Warning System (PWS) notification.

The system information may include the Earthquake and Tsunami Warning System (ETWS), Commercial Mobile Alert Service (CMAS), Extended Access Barring (EAB), and the like.

In LTE, SIB 10 (SystemuInformatoinBlockType10) includes primary notification (short notification) of the ETWS, and SIB 11 (SystemuInformatoinBlockType11) includes secondary notification (detailed information) of the ETWS.

In NR, SIB 6 includes primary notification of the ETWS, and SIB 7 includes secondary notification of the ETWS.

### (Issue)

For future radio communication systems (for example, Beyond 5G, 6G), further communication performance improvement, use case diversification, and the like are under study.

In existing NR, when a terminal (for example, a UE) in an idle mode performs data transmission/reception, the terminal needs to transition to a connected mode by performing random access procedure or the like to perform the data transmission/reception, and thus power consumption/latency increases.

Thus, the inventors of the present invention came up with the idea of a method for transmitting/receiving data from an idle/inactive mode.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a frequency carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

### (Radio Communication Method)

### <First Embodiment>

A terminal may transmit, in a state corresponding to an idle/inactive mode, UL data (PUSCH) without specific procedure (without performing specific procedure). The specific procedure may be random access procedure, or may be transmission of a random access preamble (PRACH). In the state corresponding to the idle/inactive mode, the terminal may not perform the specific procedure before transmission of the UL data (PUSCH).

In the state corresponding to the idle/inactive mode, the terminal may transmit the UL data before transmission of the random access preamble. For the specific procedure, the UL data may be transmitted in the random access procedure before transmission of the random access preamble.

The terminal may judge, on the basis of a specific parameter, whether to transmit the UL data without the specific procedure. The specific parameter may be at least one of DL synchronization deviation (time, measurement value of DL synchronization deviation), UL synchronization deviation (time/degree, estimated value of UL synchronization deviation), a movement distance of the terminal, a measurement result, elapsed time, and a type/capability of the terminal.

### <<Aspect 1-1>>

The specific parameter may be DL synchronization deviation. The terminal may judge, on the basis of the DL synchronization deviation, whether to transmit the UL data without the specific procedure.

When the DL synchronization is large, the terminal may fail to receive a DL signal, interference received by the DL signal or interference given by the DL signal may increase, demodulation performance may deteriorate, or the like.

The terminal may receive a specific DL signal to detect the DL synchronization deviation on the basis of the specific DL signal. The specific DL signal may be a reference signal, a synchronization signal, an SS/PBCH block, or the like.

The terminal may estimate a degree of UL synchronization deviation on the basis of the DL synchronization deviation. The terminal may judge, on the basis of the estimated degree of the UL synchronization deviation, whether to transmit the UL data without the specific procedure.

The terminal may judge, on the basis of DL synchronization deviation from a specific time (occasion, timing, trigger), whether to transmit the UL data without the specific procedure. The specific time may be at least one of time 1 to time 3 below.
[Time 1] Last UL transmission
[Time 2] A time at which a state ceases to be a state capable of holding a synchronization condition (for example, a connected mode)
[Time 3] Another time/operation/state transition

A size (threshold value) of the DL synchronization deviation with which UL data (PUSCH) can be transmitted without the specific procedure may be notified/configured, or may be defined in specifications. The threshold value may be a CP length. When a size of the DL synchronization deviation is less than or equal to the threshold value, in the state corresponding to the idle/inactive mode, the terminal may transmit UL data (PUSCH) without the specific procedure.

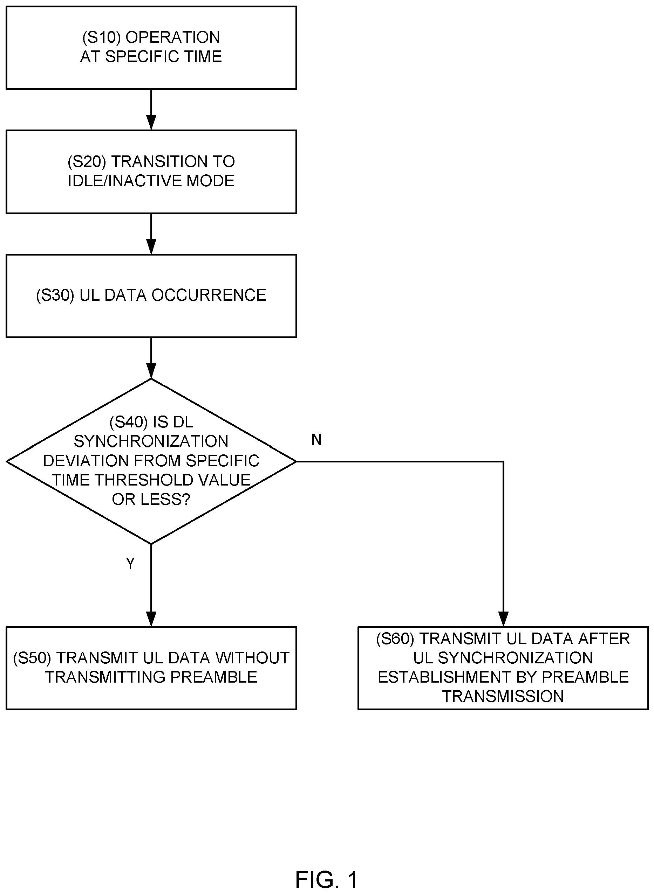

In an example of FIG. 1, after operation at the specific time (S10), the terminal transitions to the idle/inactive mode (S20). Subsequently, when the UL data occurs in the terminal (S30), the terminal judges whether a size of the DL synchronization deviation from the specific time is less than or equal to the threshold value (S40). When the size of the DL synchronization deviation is less than or equal to the threshold value (S40: Y), the terminal transmits UL data (PUSCH) without transmitting a random access preamble (S50). When the size of the DL synchronization deviation is not less than or equal to the threshold value (S40: N), the terminal transmits UL data (PUSCH) after transmitting a random access preamble to establish UL synchronization (S60) .

In this PUSCH transmission, the terminal may use a timing advance (TA) being held.

In the present disclosure, the TA held by the terminal may be a TA notified by higher layer signaling before the transition to the idle/inactive mode. The higher layer signaling may be a random access response (RAR), or may be a MAC CE.

### <<Aspect 1-2>>

The specific parameter may be a terminal movement distance/measurement result/elapsed time. The terminal may judge, on the basis of the movement distance/measurement result/elapsed time, whether to transmit the UL data without the specific procedure.

The terminal may receive a specific DL signal to compute the measurement result on the basis of the specific DL signal. The specific DL signal may be a reference signal, a synchronization signal, an SS/PBCH block, or the like.

The terminal may judge, on the basis of a movement distance/measurement result/elapsed time from a specific time (occasion, timing), whether to transmit the UL data without the specific procedure. The specific time may be at least one of time 1 to time 3 below.
[Time 1] Last UL transmission
[Time 2] A time at which a state ceases to be a state capable of holding a synchronization condition (for example, a connected mode)
[Time 3] Another time/operation/state transition

A size (threshold value) of the specific parameter with which UL data (PUSCH) can be transmitted without the specific procedure may be notified/configured, or may be defined in specifications. The threshold value may be a CP length. When a size of the specific parameter is less than or equal to the threshold value, in the state corresponding to the idle/inactive mode, the terminal may transmit UL data (PUSCH) without the specific procedure.

The terminal may measure/detect/compute a distance of movement of the terminal itself. The terminal may have a sensor/positioning apparatus (global positioning system (GPS)) for measurement of a location/distance of movement of the terminal itself, or the terminal or a base station may perform positioning of the terminal on the basis of transmission/reception of a signal. The terminal may compute the distance of the movement on the basis of a result of this positioning.

The measurement result may be at least one of signal strength, quality, RSRP, RSRQ, and SINR. The terminal may compute the measurement result on the basis of reception of a DL signal.

The elapsed time may be indicated by a timer. A length of the timer may be notified/configured, or may be defined in specifications.

In this PUSCH transmission, the terminal may use a TA being held.

### <<Aspect 1-3>>

A cyclic prefix (CP)/guard period (GP) for the PUSCH may be variable. The CP/GP for the PUSCH may be notified/configured, or may be defined in specifications. A special (dedicated) CP/GP for PUSCH transmission without the specific procedure (in the idle/inactive mode) may be notified/configured, or may be defined in specifications. The CP may indicate a period just before the PUSCH (first symbol of the PUSCH). The GP may indicate a period just after the PUSCH (last symbol of the PUSCH), or may indicate a period between PUSCH occasions.

For example, a CP/GP for PUSCH transmission without the specific procedure (in the idle/inactive mode) may be longer than a CP/GP for PUSCH transmission with the specific procedure (in the connected mode). The longer CP/GP is used for the PUSCH transmission without the specific procedure, thereby allowing error/interference in PUSCH transmission to be avoided.

A TA used for this PUSCH transmission may be 0, or may be a value held by the terminal. Alternatively, the TA used for this PUSCH transmission may be a value obtained by correcting a TA value held by the terminal or 0 on the basis of a specific parameter (DL synchronization deviation or the like). The TA mentioned here may be a value to which TA-related offset is added, or may be a value to which the TA-related offset is not added. The TA-related offset may be offset notified by higher layer signaling before the transition to the idle/inactive mode. The higher layer signaling may be N_TA-Offset applied to all UL transmission other than this PUSCH transmission in a serving cell. The offset may be defined for a duplex mode and a frequency range for the serving cell.

The terminal may judge, on the basis of a specific parameter, whether to transmit the UL data without the specific procedure.

The terminal may determine a length of the CP/GP on the basis of a specific parameter from a specific time (occasion, timing). The specific parameter may be at least one of DL synchronization deviation (time), UL synchronization deviation, a movement distance of the terminal, a measurement result, elapsed time, and a cell radius. The specific time may be at least one of time 1 to time 3 below.
[Time 1] Last UL transmission
[Time 2] A time at which a state ceases to be a state capable of holding a synchronization condition (for example, a connected mode)
[Time 3] Another time/operation/state transition

A relationship between the specific parameter and the length of the CP/GP may be defined in specifications, or may be notified/configured. For example, in the relationship, the greater a size of the specific parameter becomes, the longer the length of the CP/GP may become.

A CP/GP with assumption of maximum propagation delay may be notified/configured, or may be defined in specifications. The maximum propagation delay may be based on a cell radius. The cell radius may be a size of a cell on which the terminal camps. For example, a length of a CP/GP for a PUSCH without the specific procedure may be the same as a length of a CP/GP for a preamble. The length of the CP/GP for the preamble may be based on the maximum propagation delay. The length of the CP/GP for the preamble (for example, N_CP^RA) may be associated with a preamble format/PRACH configuration. A CP/GP length corresponding to a configured preamble format/PRACH configuration may be determined.

### <<Aspect 1-4>>

The specific parameter may be a type/capability of the terminal. The terminal may judge, on the basis of the type/capability of the terminal, whether to transmit the UL data without the specific procedure. The type/capability of the terminal may be determined on the basis of at least one of a UE class (for example, power class), a UE capability, a UE category, a service, a traffic type, and a priority.

When the terminal has a specific type/capability, the terminal may transmit the UL data without the specific procedure. The specific type/capability may be at least one of a fixed UE, an IoT-related terminal, a sensor-related terminal, a terminal having lower transmission power compared to another type of terminal, a RedCap terminal, and MTC. The fixed UE may be a terminal whose location is assumed to be fixed.

### <<Aspect 1-5>>

Two or more of aspect 1-1 to aspect 1-4 may be combined with each other.

According to this embodiment, a terminal in an idle/inactive mode can appropriately transmit UL data without specific procedure.

### <Second Embodiment>

A terminal may receive, in a state corresponding to an idle/inactive mode, DL data without specific procedure. In the state corresponding to the idle/inactive mode, the terminal may not perform the specific procedure before reception of the DL data. The specific procedure may be random access procedure, or may be transmission of a random access preamble (PRACH).

In the state corresponding to the idle/inactive mode, the terminal may receive the DL data before transmission of the random access preamble. For the specific procedure, the DL data may be received in the random access procedure before transmission of the random access preamble.

### <<Aspect 2-1>>

A base station (area) for transmitting DL data.

A specific ID with which a terminal (UE) can be uniquely identified may be configured in units of a base station (area) for transmitting DL data. In some cases, for the terminal, the specific ID can be recognized when DL data is received or when DL data scheduling information is received. For example, the DL data or the DL data scheduling information may include the specific ID. For the DL data or for the DL data scheduling information, scrambling based on the specific ID or the like may be performed.

A specific ID with which a terminal (UE) can be uniquely identified in units of a base station (area) for transmitting DL data may be based on an ID held by the terminal. In some cases, for the terminal, the specific ID can be recognized when DL data is received or when DL data scheduling information is received. For example, the DL data or the DL data scheduling information may include the specific ID. For the DL data or for the DL data scheduling information, scrambling based on the specific ID or the like may be performed.

### [Aspect 2-1-1]

One or more base stations assumed to be camped on by the terminal (for example, all base stations or coverage assumed to be camped on by the terminal) may transmit the DL data. Coverage (area) of a base station to transmit the DL data to a certain terminal may be the same as (equivalent to) coverage (area) of a base station to transmit paging to the terminal. The DL data may have a size limited to a certain size or less, or may be data to be broadcast.

### [Aspect 2-1-2]

The terminal may notify/report/transmit, to a network (NW), information/signal related to camping/location of the terminal itself. The NW may determine, on the basis of the information, a base station to transmit DL data. The base station may transmit the DL data.

### [[Aspect 2-1-2-1]]

When information related to camping/location of a terminal is changed, the terminal may notify/report, to a base station, information related to the change. Information related to camping/location of a terminal may indicate a cell (camping cell) on which the terminal camps (exists) or the like.

### [[Aspect 2-1-2-2]]

The terminal may (implicitly) notify the information related to the camping/location by transmitting a specific UL signal. The specific UL signal may be a reference signal, or may be a preamble. The terminal may transmit the specific UL signal periodically. The NW may determine, on the basis of reception of the specific UL signal, the base station to the transmit the DL data.

### [Aspect 2-1-3]

The terminal may determine one or more base stations on the basis of a result related to positioning of the terminal itself, and may receive DL data from the one or more base stations.

### <<Aspect 2-2>>

An ACK for the DL data.

### [Aspect 2-2-1]

The terminal may transmit a specific preamble as the ACK for the DL data. The specific preamble may be associated with a UE ID (UE-specific ID), or may be associated with the specific ID of aspect 2-1. The UE ID may be a UE ID, or may be a radio network temporary identifier (RNTI) (for example, a C-RNTI). In the transmission of the specific preamble, UL synchronization may not be established, or a TA may not be used. When receiving the specific preamble, the NW may regard the preamble as the ACK.

### [Aspect 2-2-2]

The terminal may transmit a specific UL signal as the ACK for the DL data. A CP/GP length in the specific UL signal may be a special value. A TA may not be applied to the specific UL signal. The specific UL signal may be a reference signal, or may be a PUCCH. The specific UL signal may be associated with a UE ID. The UE ID may be a UE ID, or may be an RNTI (for example, a C-RNTI).

### [Aspect 2-2-3]

The terminal may employ, in the ACK for the DL data, at least one of aspect 1-1 to aspect 1-5 in the first embodiment. The terminal may transmit the ACK in place of the UL data in the first embodiment. The UL data in the first embodiment may mean the ACK.

According to this embodiment, a terminal in an idle/inactive mode can receive DL data without specific procedure.

### <Third Embodiment>

The first embodiment and a second embodiment may be combined with each other.

A transmission resource (common resource, specific resource) common to the PUSCH in the first embodiment and the ACK in the second embodiment may be notified/configured, or may be defined in specifications.

Part or all of the common resource may be used as a PUSCH transmission resource in UL data transmission. Part or all of the common resource may be used as an ACK transmission resource in ACK transmission based on DL data reception. The ACK may follow the second embodiment, or may be any one of a preamble, a PUCCH, and an RS. The PUSCH transmission resource and the ACK transmission resource out of the common resource may be different from each other.

The common resource may be configured as a UE-specific resource, or may be configured as a cell-specific resource.

When the terminal tries to simultaneously transmit the PUSCH and the ACK (contention between the PUSCH and the ACK occurs), the terminal may follow at least one of transmission method 1 and transmission method 2 below.

### [Transmission Method 1]

The terminal may transmit a PUSCH to include, in the PUSCH, information corresponding to the ACK.

### [Transmission Method 2]

Priorities for the PUSCH transmission and the ACK transmission may be defined in specifications, or may be notified/configured.

For a time/frequency resource amount used for actual transmission in the common resource, a PUSCH resource amount and an ACK resource amount may be different from each other.

According to this embodiment, it is unnecessary to individually notify/configure a PUSCH transmission resource without specific procedure and an ACK transmission resource without specific procedure, and thus notification overhead can be suppressed.

### <Other Embodiments>

A higher layer parameter (RRC IE)/UE capability corresponding to a function (characteristic, feature) in each embodiment described above may be defined. The UE capability may indicate that this function is supported.

A UE for which the higher layer parameter (for enabling the function) corresponding to the function has been configured may perform the function. "A case that a UE for which the higher layer parameter corresponding to the function has not been configured does not perform the function (for example, follows Rel. 15/16)" may be defined.

A UE that has reported the UE capability indicating that the function is supported may perform the function. "A case that a UE that has not reported the UE capability indicating that the function is supported does not perform the function (for example, follows Rel. 15/16)" may be defined.

When a UE has reported the UE capability indicating that the function is supported, and the higher layer parameter corresponding to the function has been configured, the UE may perform the function. "A case that when a UE does not report the UE capability indicating that the function is supported or when the higher layer parameter corresponding to the function is not configured, the UE does not perform the function (for example, follows Rel. 15/16)" may be defined.

The UE capability may indicate whether a UE supports the function.

The UE capability may indicate whether to support a case that UL data is transmitted without specific procedure. The UE capability may indicate whether to support a case that DL data is received without specific procedure. The UE capability may indicate whether to support a case that an ACK for DL data is transmitted without specific procedure.

The UE capability may indicate whether to support the function for each frequency range (FR)/band/duplex scheme.

According to this higher layer parameter/UE capability, the UE can achieve the above-described function while maintaining compatibility with existing specifications.

In the present disclosure, an X mode, RRC_X, and an X state may be interchangeably interpreted. Here, X may be at least one of "idle," "inactive," and "connected." In the present disclosure, an idle/inactive mode, a state corresponding to an idle/inactive mode, and a state other than a connected mode may be interchangeably interpreted.

In the present disclosure, a terminal, a UE, a node, and a device may be interchangeably interpreted.

In the present disclosure, "camping," "camp (camp on)," and "registered" may be interchangeably interpreted. In the present disclosure, a camping cell, a serving cell, and coverage may be interchangeably interpreted.

In the present disclosure, a preamble, a random access preamble, a PRACH preamble, a preamble index, a root sequence, a cyclic shift, a RACH occasion, and a RACH resource may be interchangeably interpreted.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

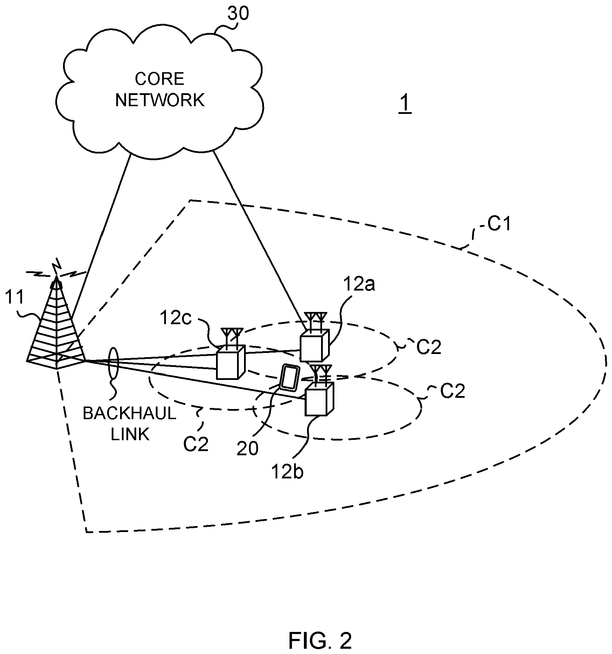

FIG. 2 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

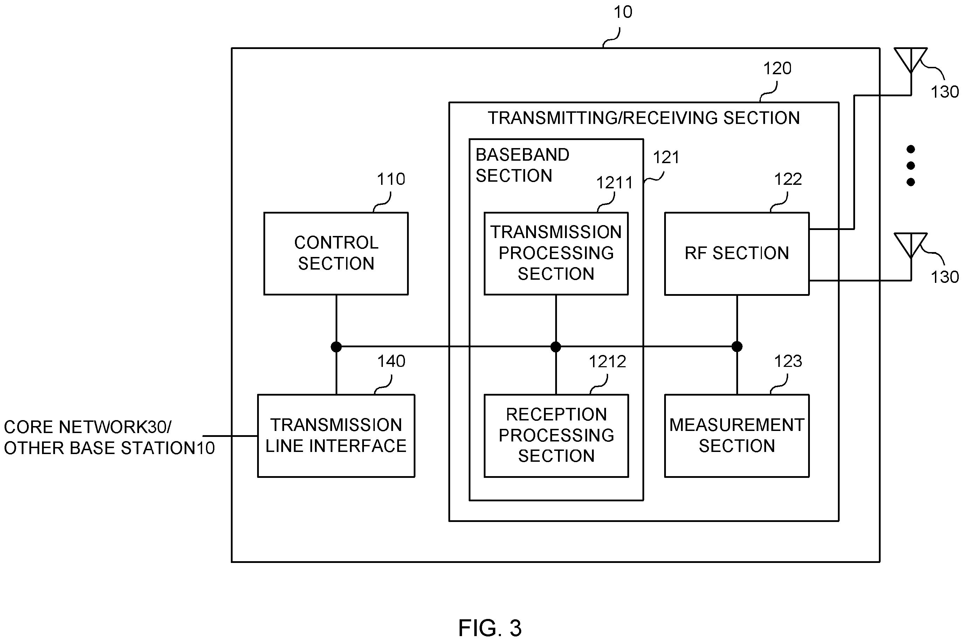

FIG. 3 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive a signal for judgment of a plurality of terminals (for example, a UE group) sharing uplink data (for example, a measurement result, a judgment result, a destination ID, or a source ID).

The control section 110 may control (for example, configure, indicate, or schedule), for a first terminal out of the plurality of terminals on the basis of the signal, either reception of the uplink data from a second terminal out of the plurality of terminals or transmission of the uplink data to the second terminal.

The control section 110 may control, for a terminal in either state of an idle state or an inactive state, operation for at least one of transmission of downlink data and reception of uplink data.

The transmitting/receiving section 120 may perform the operation without receiving, before the operation, a random access preamble from the terminal in the state.

### (User Terminal)

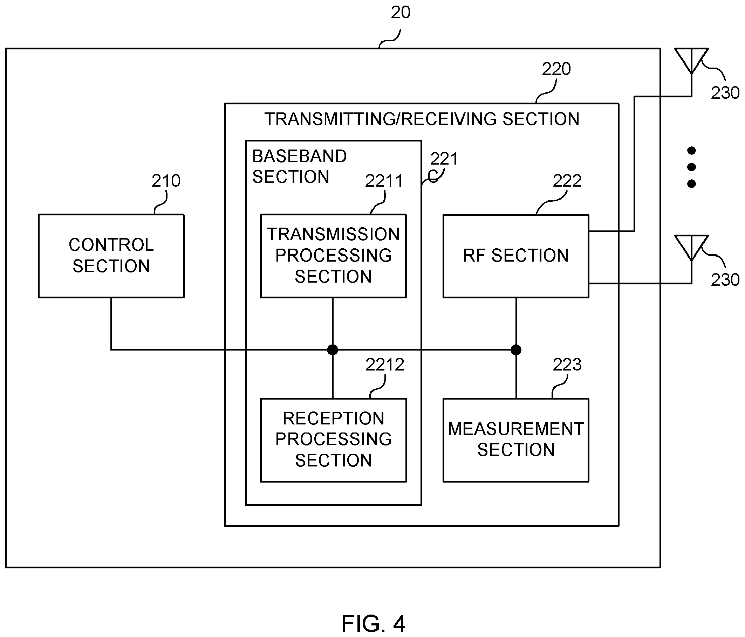

FIG. 4 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may control, in either state of an idle state or an inactive state, operation for at least one of reception of downlink data and transmission of uplink data.

The transmitting/receiving section 220 may perform the operation without transmitting, before the operation, a random access preamble in the state.

The control section 210 may judge, on the basis of a parameter for at least one of downlink signal synchronization deviation time, a movement distance of the terminal, a result of measurement by the terminal, elapsed time, a type of the terminal, and a capability of the terminal, whether to transmit the random access preamble before the transmission of the uplink data in the state.

When the downlink data is received, the control section 210 may control transmission of an uplink signal corresponding to an acknowledgement (ACK) for the downlink data.

A specific resource may be configured. The control section 210 may use some or all resources of the specific resource for the transmission of the uplink data, and may use some or all resources of the specific resource for the transmission of the uplink signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (two or more physically or logically separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

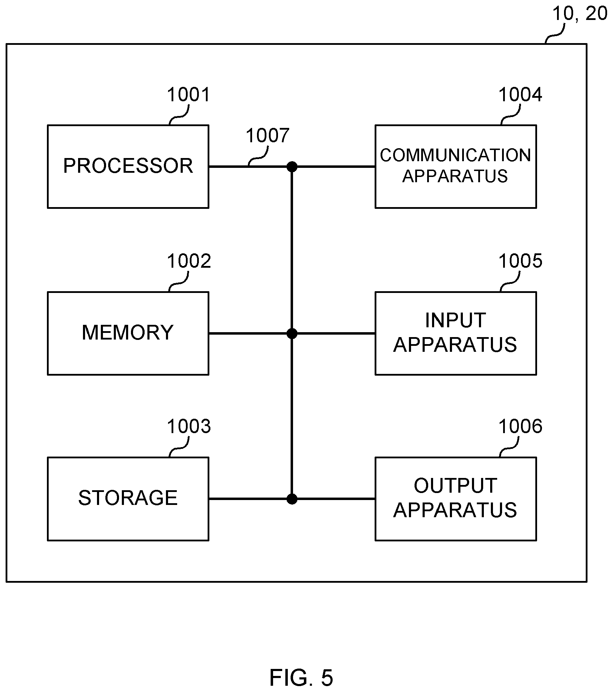

For example, a base station, a user terminal, and so on according to one embodiment of the present disclosure may function as a computer that executes the processes of the radio communication method of the present disclosure. FIG. 5 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that controls, in either state of an idle state or an inactive state, operation for at least one of reception of downlink data and transmission of uplink data; and
a transmitting/receiving section that performs the operation without transmitting, before the operation, a random access preamble in the state.

2. The terminal according to claim 1, wherein
the control section judges, on the basis of a parameter for at least one of downlink signal synchronization deviation time, a movement distance of the terminal, a result of measurement by the terminal, elapsed time, a type of the terminal, and a capability of the terminal, whether to transmit the random access preamble before the transmission of the uplink data in the state.

3. The terminal according to claim 1 or 2, wherein
when the downlink data is received, the control section controls transmission of an uplink signal corresponding to an acknowledgement (ACK) for the downlink data.

4. The terminal according to claim 3, wherein
a specific resource is configured, and
the control section uses some or all resources of the specific resource for the transmission of the uplink data, and uses some or all resources of the specific resource for the transmission of the uplink signal.

5. A radio communication method for a terminal, the radio communication method comprising:
controlling, in either state of an idle state or an inactive state, operation for at least one of reception of downlink data and transmission of uplink data; and
performing the operation without transmitting, before the operation, a random access preamble in the state.

6. A base station comprising:
a control section that controls, for a terminal in either state of an idle state or an inactive state, operation for at least one of transmission of downlink data and reception of uplink data; and
a transmitting/receiving section that performs the operation without receiving, before the operation, a random access preamble from the terminal in the state.
